# EUROPEAN PATENT APPLICATION

(11) **EP 4 535 231 A1**
(43) Date of publication of application: **09.04.2025**
(21) Application number: 24187150.8
(22) Date of filing: 08.07.2024
(51) Int. Cl.: G06N 3/0442, A01B 71/00, G06N 3/045

(54) **MACHINE LEARNING BASED CONTROL AND REAL-TIME SETTINGS ADJUSTMENTS**

(30) Priority: 05.10.2023 US 202363588220 P
(71) Applicant: AGCO International GmbH, 8212 Neuhausen am Rheinfall (CH)
(72) Inventor: ZHOU, Kun, 8930 Randers (DK); NILSSON, Rene, 8900 Randers (DK); LAUSDAHL, Kenneth, 8900 Randers (DK); BECH, Søren, 8900 Randers (DK); LUND, Jens, 8900 Randers (DK)
(74) Representative: AGCO Intellectual Property Department

(57) **Abstract**

Embodiments include technologies that use machine learning to control mobile machines as well as to adjust settings of mobile machines in real time (e.g., agricultural machine settings, construction machine settings, forestry machine settings, or landscaping machine settings). Some embodiments include a method that includes using a mobile machine (110) to perform work in a field using first machine settings (step 302) and recording performance information (118). The performance information indicating a performance of the mobile machine while performing the work in the field (step 304). Also, the method includes using a computing system (102, 200) to input the performance information into a trained deep learning model (107b) and to receive new machine settings information (108) from the trained model (step 306), and using the computing system to control the machine according to the new settings information (step 308).

## Description

### CROSS-REFERENCE TO RELATED APPLICATIONS

This application claims the benefit of the filing date of United States Provisional Patent Application Serial No. 63/588,220, filed October 5, 2023, the disclosure of which is hereby incorporated herein in its entirety by this reference.

### TECHNICAL FIELD

The present disclosure relates to methods and systems using machine learning to control mobile machines as well as to adjust settings of mobile machines in real time.

### BACKGROUND

It is known to predefine or select settings for various operations of mobile machines, such as for agricultural or construction operations performed by mobile machines. Such settings are often determined manually by the operator of a machine working in an environment in an attempt to optimize an operation in terms of efficiency and cost. More recently, computing systems have been developed that suggest operational or machine settings to an operator based on an operational task, field conditions, etc.; however, there is much room for improvement on such systems. In some cases, determining mobile machine settings has relied on manual planning, expert knowledge, and simple computations (e.g., heuristic algorithms) performed by computing systems. However, such planning does not consider the complex interactions between various factors, such as terrain, ground conditions, soil type, weather conditions, and machinery capabilities. With the complex interactions not being considered, preselected settings can include subpar settings and results (such as increased fuel consumption), ultimately leading to higher operational costs and reduced productivity. Thus, it would be advantageous to provide a system (and associated method) which overcomes or at least mitigates one or more problems associated with the prior art systems and considers complex interactions between various factors.

### SUMMARY

Described herein are techniques for using machine learning to control mobile machines as well as to adjust settings of mobile machines in real time. The mobile machines can be or include mobile agricultural machines, mobile construction machines, mobile forestry machines, or mobile landscaping machines, for example. The techniques disclosed herein provide specific technical solutions to at least overcome the technical problems mentioned in the background section or other parts of the application as well as other technical problems not described herein but recognized by those skilled in the art.

In some embodiments, the techniques include technologies that use machine learning to control mobile machines as well as to adjust settings of mobile machines in real time. With respect to some embodiments, disclosed herein are computerized methods for using machine learning to control mobile machines as well as to adjust settings of mobile machines in real time, as well as a non-transitory computer-readable storage medium for carrying out technical operations of the computerized methods. The non-transitory computer-readable storage medium has tangibly stored thereon, or tangibly encoded thereon, computer-readable instructions that when executed by one or more devices (e.g., one or more personal computers or servers) cause at least one processor to perform a method for improved systems and methods for using machine learning to control mobile machines as well as to adjust settings of mobile machines in real time.

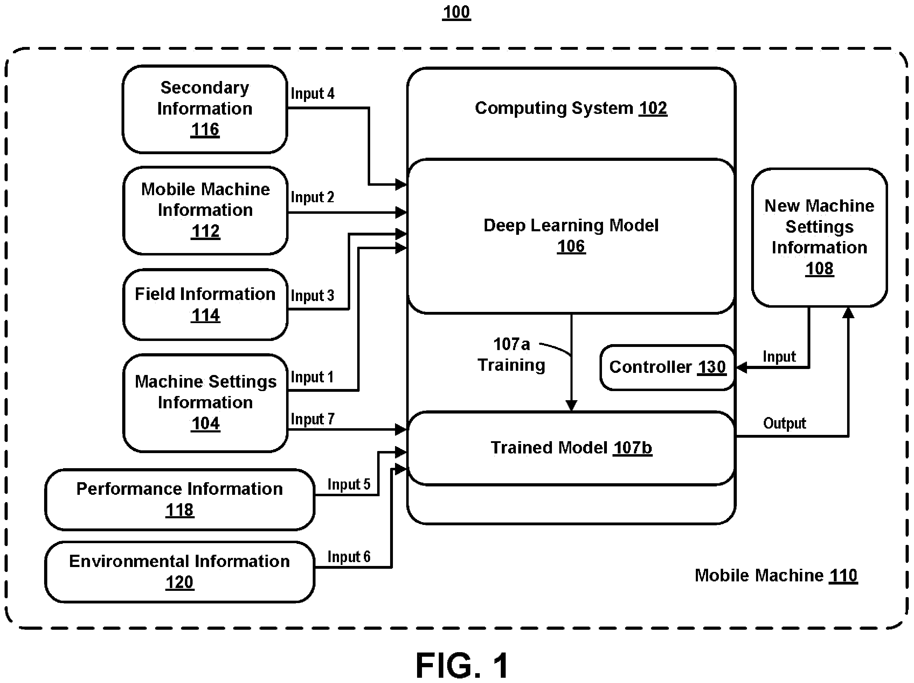

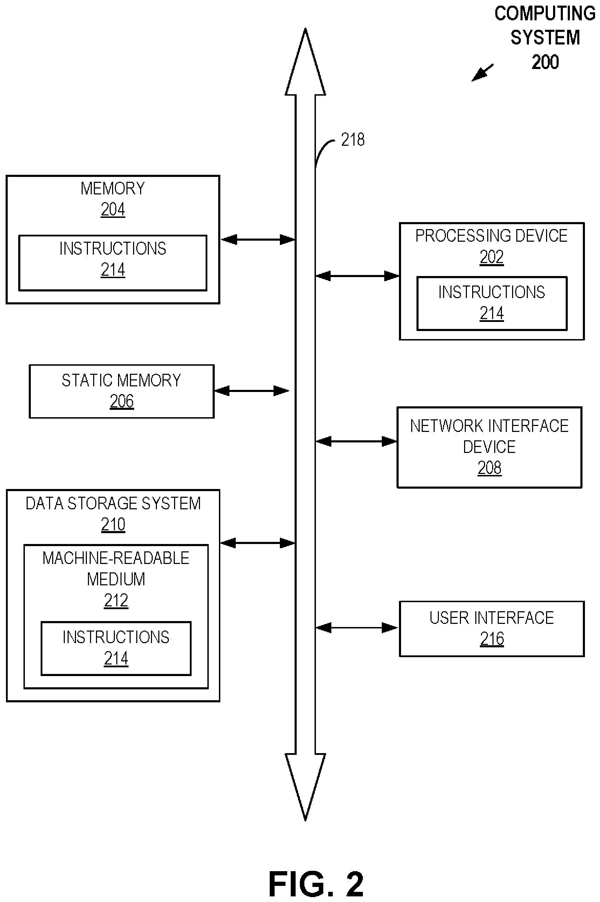

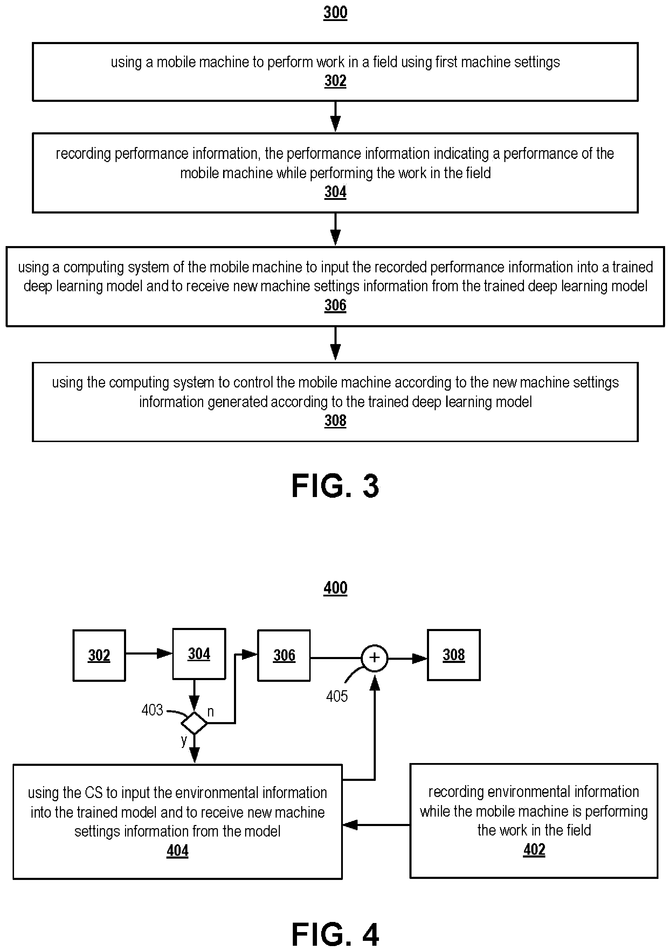

For example, some embodiments include a method for using machine learning to control mobile machines as well as to adjust settings of mobile machines in real time. In some examples, the method includes using a mobile machine (e.g., see mobile machine 110 shown in FIG. 1) to perform work in a field using first machine settings (e.g., see step 302 shown in FIG. 3). The method also includes recording performance information (e.g., see performance information 118 depicted in FIG. 1). The performance information indicates a performance of the mobile machine while performing the work in the field (e.g., see step 304). The method also includes using a computing system (e.g., see computing system 102 or 200 shown in FIGS. 1 and 2 respectively) of the mobile machine to input the recorded performance information into a trained deep learning model (e.g., see trained model 107b depicted in FIG. 1) and to receive new machine settings information (e.g., see new machine settings information 108 shown in FIG. 1) from the trained deep learning model (e.g., see step 306 shown in FIG. 3). Also, the method includes using the computing system to control the mobile machine according to the new machine settings information generated according to the trained deep learning model (107b) (e.g., see step 308).

In some embodiments, the method also includes recording environmental information (e.g., see environmental information 120 depicted in FIG. 1) while the mobile machine is performing the work in the field, the environmental information relating to the environment in which the mobile machine is operating (e.g., see step 402 shown in FIG. 4). And, in some examples, the method includes using the computing system to input the environmental information into the trained deep learning model (107b) and to receive new machine settings information from the trained deep learning model (e.g., see step 404). In some instances, the environmental information includes one or more of field crop information, wind direction or speed, ambient temperature, ambient humidity, soil characteristics, time of day, date, and geographic region. And, in some examples, the field crop information includes one or more of crop height, crop color, crop moisture, crop lodging, and weed information.

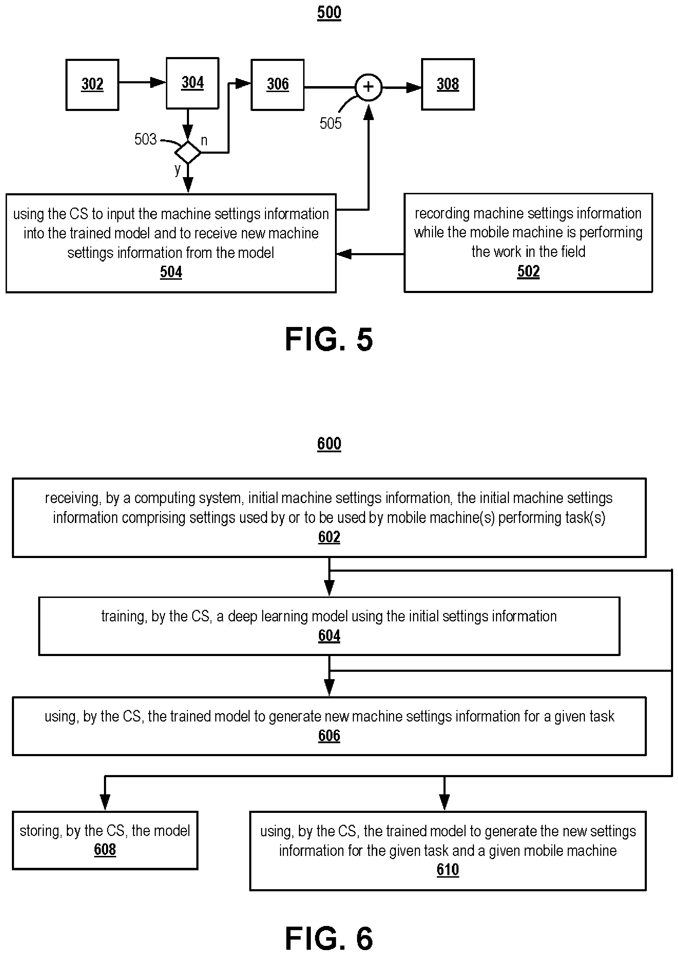

In some embodiments, the method also includes recording machine settings information (e.g., see machine settings information 104) while the mobile machine is performing the work in the field (e.g., see step 502 depicted in FIG. 5). And, such a method also includes using the computing system to input the machine settings information into the trained deep learning model and to receive the new machine settings information from the trained deep learning model (e.g., see step 504). In some examples, the method also includes storing the trained deep learning model on the mobile machine (e.g., see step 608 depicted in FIG. 6).

In some embodiments, the trained deep learning model is configured to generate the new machine settings information to minimize fuel consumption of the mobile machine when performing a given field operation. In embodiments, the trained deep learning model is configured to generate the new machine settings information to minimize operation time of the mobile machine when performing a given field operation.

In some embodiments, the mobile machine is a harvester and the performance information includes one or more of ground speed, fuel efficiency, crop throughput, crop quality, crop cleanliness, and crop yield. Crop quality can include the number of kernels of grain that are cracked or broken. In some other examples, the mobile machinery is a construction machine, a forestry machine, or a landscaping machine.

In some embodiments, the settings (e.g., see machine settings information 104) and the new settings (e.g., see new machine settings information 108) include implement positions or implement heights. In some embodiments, the initial settings and the new settings include one or more of implement or actuator operation speeds or rates or one or more of dispensing rates, evacuation rates, flow rates, spray rates, or seeding rates. In some embodiments, the initial settings and the new settings include one or more of mobile machine default ground speeds, mobile machine maximum ground speeds, or mobile machine minimum ground speeds. In some embodiments, the initial settings and the new settings include one or more of default hydraulic pressures, maximum hydraulic pressures, or minimum hydraulic pressures, or one or more of default operating temperatures or pressures, maximum operating temperatures or pressures, or minimum operating temperatures or pressures.

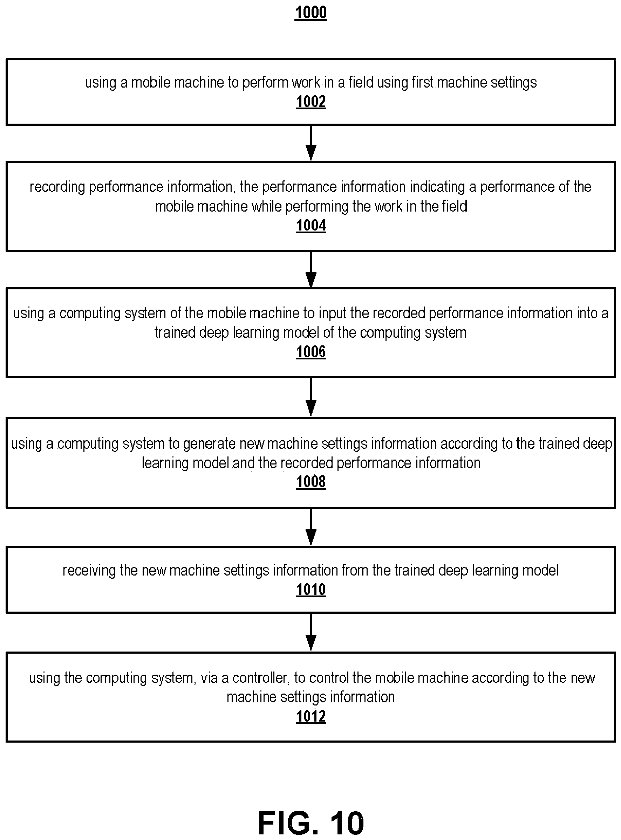

Also, in some embodiments, the method includes using the computing system, which can be part of the mobile machine, to input the recorded performance information into the trained deep learning model (e.g., see step 1006 shown in FIG. 10) and using the computing system to generate the new machine settings information according to the trained deep learning model and the recorded performance information (e.g., see step 1008). And, the method can include receiving the new machine settings information from the trained deep learning model, and using the computing system, via a controller (e.g., see controller 130 of machine 110), to control the mobile machine according to the new machine settings information (e.g., see step 1012).

These and other important aspects of the invention are described more fully in the detailed description below. The invention is not limited to the particular methods and systems described herein. Other embodiments can be used and changes to the described embodiments can be made without departing from the scope of the claims that follow the detailed description. Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various example embodiments of the disclosure.
FIG. 1 illustrates an example technical solution to the example technical problems described herein, in accordance with some embodiments of the present disclosure.
FIG. 2 illustrates a block diagram of example aspects of a computing system, in accordance with some embodiments of the present disclosure.
FIGS. 3 to 9 illustrate methods in accordance with some embodiments of the present disclosure.
FIG. 10 illustrates a method according to an embodiment of the invention.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications, and equivalents as will become apparent from consideration of the following detailed description and other parts of this disclosure.

Described herein are techniques for using machine learning to control mobile machines as well as to adjust settings of mobile machines in real time. The mobile machinery can include agricultural machines, mobile construction machines, mobile forestry machines, and mobile landscaping machines, for example. Also, techniques disclosed herein provide specific technical solutions to at least overcome the technical problems mentioned in the background section or other parts of the application as well as other technical problems not described herein but recognized by those skilled in the art. In some embodiments, the techniques include technologies that use deep learning to control mobile machines as well as to adjust settings of mobile machines in real time.

As mentioned, it is known to predetermine machine settings for various operations. But such planning is often performed manually by the operator of machines. More recently, computing systems have been developed that suggest operational settings to an operator based on an operational task, field conditions, etc.; however, there is much room for improvement on such systems in that such systems are not sophisticated enough to consider complex interaction between various factors. On the other hand, the techniques described herein provide example improvements to such systems and beyond in that they go beyond manual determinations of settings, expert knowledge, and simple computations (e.g., heuristic algorithms) and can consider the complex interactions between various factors, such as terrain, ground conditions, soil type, weather conditions, and machinery capabilities. With the complex interactions being considered by the novel techniques described herein, example technical problems can be resolved. For example, the technologies described here can avoid determinations of subpar settings with increased fuel consumption that ultimately result in higher operational costs and reduced productivity. And, this is just one example of the benefits of the disclosed techniques.

Furthermore, the technologies described herein leverage advancements in artificial intelligence (Al), machine learning, and deep learning, which makes it possible to develop more sophisticated machine settings determinations capable of considering a multitude of factors and making enhanced decisions from those made by the prior art. The technologies use deep learning models, based on Recurrent Neural Networks (RNNs) or Long Short-Term Memory (LSTM) networks, for example, or Transformer-based models. Such models can generate settings that consider many factors in tasks, such as generating or updating suitable settings for various farming, construction, forestry, and landscaping applications. Combined with GPS technology and the increasing digitization of mobile machinery, large amounts of data has become collectable to facilitate the creation and training of such models. The collected data can be used to train deep learning models, allowing them to learn complex patterns and dependencies between a multitude of factors and complex interactions between various factors, such as terrain, ground conditions, soil type, weather conditions, and machinery capabilities. Also, the models described herein can control mobile machines as well as to adjust settings of mobile machines in real time, while considering various efficiencies and factors such as operational time efficiency, fuel efficiency, reduced soil compaction, and machine capabilities. The application of deep learning-based settings determinations in agricultural, construction, forestry, landscaping, and other settings has the potential to revolutionize the way corresponding businesses operate. By leveraging AI machine learning, and deep learning to control mobile machines as well as to adjust settings of mobile machines in real time, operators of mobile machines can reduce costs, improve efficiency, and minimize the environmental impact of their operations.

FIG. 1 illustrates an example technical solution to the example technical problems described herein. The technical solution, shown in FIG. 1, can include or be a part of the techniques and technologies described herein (such as any one of the methods 300, 400, 500, 600, 700, 800, 900, and 1000 shown in FIGS. 3, 4, 5, 6, 7, 8, 9, and 10 respectively) and can provide specific technical solutions to at least overcome the technical problems mentioned in the background section or other parts of the application as well as other technical problems not described herein but recognized by those skilled in the art. FIG. 1 depicts a network 100, such as a computer network, within which a computing system 102 receives various inputs (e.g., see machine settings information 104, mobile machine information 112, field information 114, and secondary information 116 as well as performance information 118 and environmental information 120). These inputs and others can be received from other computing systems within the network 100. The various inputs include or are related to some of the efficiencies and factors (such as operational time efficiency, fuel efficiency, reduced soil compaction, and machine capabilities) that is considered by the computing system in the determination of machine settings. As shown, the computing system includes a deep learning model 106 that is trained through various machine learning and deep learning techniques (e.g., see training 107a), and the result of the training provides a trained model 107b. Once the model is trained (e.g., see trained model 107b), it can be used to generate new machine settings information 108 for performing tasks within a field. Also, as shown, the computing system 102 is a part of a mobile machine 110 as are the inputs and outputs of the computing system (including the inputs of the deep learning model 106 and the trained model 107, the output of the trained model 107b, and the input of controller 130). In some embodiments, the computing system 102 and the inputs and outputs of the computing system are part of a remote system in that the remote system is physically and geographically separated from the mobile machine 110 but communicates with a system or controller of the machine over a telecommunications or computer network (such as network 100). The mobile machine 110 can be or include an agricultural machine, a construction machine, a forestry machine, or a landscaping machine, or some other type of mobile machine that can operate according to settings information.

The computing system 102 includes electronics such as one or more controllers (e.g., see controller 130), sensors, busses, and computers. The computing system 102 includes at least a processor, memory, a communication interface and can include one or more sensors, which can make the mobile machine 110 an individual computing device. In the case of the network 100 including the Internet, the mobile machine 110 can be considered an Internet of Things (IoT) device. Also, in some embodiments, the computing system 102 is a part of a cloud computing system. The computing system 102 and the mobile machine 110 can include both electronic hardware and software that can integrate between the systems of the computing system and the mobile machine 110. And, such hardware and software (such as controllers and sensors and other types of electrical and/or mechanical devices) can be configured to a communicate with a remote computing system via the communications network 100.

In some embodiments, where the mobile machine 110 is an agricultural machine, it can include or be a combine harvester, a tractor, a planter, a sprayer, a baler, etc. In some embodiments, where the mobile machine 110 is a construction machine, it can include or be an excavator, a compaction machine (such as one with rollers), a loader, a bulldozer, a skid steer machine, a grader, etc. In some embodiments, where the mobile machine 110 is a forestry or landscaping machine, it can include or be a delimber, a feller buncher, a stump grinder, a mulcher, a yarder, a forwarder, log loader, a harvester, mower, etc. In some embodiments, the mobile machine 110 can be or include a vehicle in that it is self-propelling. Also, in some embodiments, the mobile machine 110 can be a part of a group of similar machines or a group of different types of mobile machines.

The network 100 can include one or more local area networks (LAN(s)) and/or one or more wide area networks (WAN(s)). In some embodiments, the network 100 includes the Internet and/or any other type of interconnected communications network. The network 100 can also include a single computer network or a telecommunications network. More specifically, in some embodiments, the network 100 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including computing system 102) can be or include a computing system which includes memory that includes media. The media includes or is volatile memory components, non-volatile memory components, or a combination of thereof. In general, in some embodiments, each of the computing systems includes a host system that uses memory. For example, the host system writes data to the memory and read data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

FIG. 2 illustrates a block diagram of example aspects of a computing system 200 that can implement the technical solution shown in FIG. 1 or each main part of the solution. Also, FIG. 2 illustrates parts of the computing system 200 within which a set of instructions are executed for causing a machine (such as a computer processor or processing device 202) to perform any one or more of the methodologies discussed herein performed by a computing system (e.g., see the method steps of the methods 300, 400, 500, 600, 700, 800, 900and 1000 shown in FIGS. 3, 4, 5, 6, 7, 8, 9 and 10 respectively). In some embodiments, the computing system 200 operates with additional computing systems to provide increased computing capacity in which multiple computing systems operate together to perform any one or more of the methodologies discussed herein that are performed by a computing system.

In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in a client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 218. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application-specific integrated circuit (ASIC), a field programmable gate array (FPGA), a digital signal processor (DSP), a network processor, or the like. The processing device 202 is configured to execute instructions 214 for performing the operations discussed herein performed by a computing system. In some embodiments, the computing system 200 includes a network interface device 208 to communicate over a communications network. Such a communications network can include one or more local area networks (LAN(s)) and/or one or more wide area networks (WAN(s)). In some embodiments, the communications network includes the Internet and/or any other type of interconnected communications network. The communications network can also include a single computer network or a telecommunications network.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media. While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that causes the machine to perform any one or more of the methodologies of the present disclosure performed by a computing system. The term "machine-readable storage medium" shall accordingly be taken to include solid-state memories, optical media, or magnetic media.

Also, as shown, the computing system 200 includes user interface 216 that includes a display, in some embodiments, and, for example, implements functionality corresponding to any one of the UI devices disclosed herein. A UI, such as UI 216, or a UI device described herein includes any space or equipment where interactions between humans and machines occur. A UI described herein allows operation and control of the machine from a human user, while the machine simultaneously provides feedback information to the user. Examples of a user interface, or UI device include the interactive aspects of computer operating systems (such as GUIs), machinery operator controls, and process controls.

FIGS. 3 to 10 illustrate methods in accordance with some embodiments of the present disclosure. Methods 300, 400, 500, 600, 700, 800, 900, and 1000 of the corresponding figures are performed by any one of the computing systems described herein (e.g., see computing system 102 or 200 depicted in FIGS. 1 and 2 respectively). In some systems of the technologies disclosed herein, any steps of embodiments of the methods described herein are implementable by executing instructions corresponding to the steps, which are stored in memory (such as the instructions 214).

Deep learning-based machine settings determinations for controlling mobile machines as well as to adjust settings of mobile machines in real time involves the application of neural network architectures to analyze and predict the optimal settings for mobile machinery based on historical data. By leveraging the power of deep learning, a model can capture complex patterns and dependencies within recorded results of selected settings and other associated information, allowing for more efficient settings determination, scheduling, and execution, even in real time when the machine is operating. Such functionality is provided through method 300 or 1000 shown in FIG. 3 or 10 as well as the other methods described herein that include the steps of method 300. Also, the training of the model and using it to generate new machine settings information is provided through method 600 shown in FIG. 6 as well as the other methods described herein that include the steps of method 600. Furthermore, some embodiments include combinations of steps from method 300 and method 600 or 1000. And, some examples include steps from the other methods described herein that include steps from the methods 300, 600, or 1000.

As shown in FIG. 3, method 300 begins with step 302, which includes using a mobile machine (e.g., see mobile machine 110 shown in FIG. 1) to perform work in a field using first machine settings. At step 304, the method 300 continues with recording performance information (e.g., see performance information 118 shown in FIG. 1). The performance information indicates a performance of the mobile machine while performing the work in the field. In some embodiments, when it is determined to or the model is configured to use information containing machine performance results associated with the initial settings or initial settings information, the step 304 can include or even start with receiving, by the computing system, machine performance results associated with the initial machine settings. Also when it is determined or the model is configured to use the information containing the machine performance results, the step 304 can include training, by the computing system, the deep learning model according to the results, whether or not the model has been trained to some extent. At step 306, the method 300 continues with using a computing system (e.g., see computing system 102 or 200 shown in FIG. 1 or 2 respectively) of the mobile machine to input the recorded performance information into a trained deep learning model (e.g., see trained model 107b shown in FIG. 1) and to receive new machine settings information (e.g., see new machine settings information 108) from the trained deep learning model. At step 306, the method 300 continues with using the computing system to control the mobile machine according to the new machine settings information generated according to trained deep learning model. In some embodiments, step 306 includes communicating, by the computing system, the new machine settings information or a derivative thereof to an electronic control unit (ECU) of the mobile machine as well as at least partially controlling, by the ECU, an operation of the machine according to the new machine settings information or the derivative thereof. At step 308, the method 300 continues with using the computing system to control the mobile machine according to the new machine settings information generated according to trained deep learning model.

As shown in FIG. 4, method 400 begins with the steps from method 300 (i.e., steps 302, 304, and 306). Also, method 400 can begin with step 402, which includes recording environmental information (e.g., see environmental information 120 shown in FIG. 1) while the mobile machine is performing the work in the field. The environmental information relates to the environment in which the mobile machine is operating. Also, when it is determined to or the model is configured to use environmental information (at step 403), the method 400 includes using the computing system to input the environmental information into the trained deep learning model and to receive the new machine settings information from the trained deep learning model, which is based at least partially on the environmental information and the recorded performance information. In such an example situation, at step 308, the method continues with using the computing system to control the mobile machine according to the new machine settings information generated according to trained deep learning model (in which the new machine settings information is at least partially based on the environmental information and the recorded performance information). E.g., see step 405, which includes the using of the environmental information and the recorded performance information as a basis for the generation of the new machine settings information.

In some examples, the mobile machinery is a farming machine, a construction machine, a forestry machine, or a landscaping machine, or a combination of one or more of a farming machine, a construction machine, a forestry machine, or a landscaping machine. In some embodiments, the environmental information includes one or more of field crop information, wind direction or speed, ambient temperature, ambient humidity, soil characteristics, time of day, date, and geographic region. In some embodiments, the field crop information includes one or more of crop height, crop color, crop moisture, crop lodging, and weed information. In some embodiments, the mobile machine is a harvester and the performance information includes one or more of ground speed, fuel efficiency, crop throughput, crop quality (e.g., crop quality can include the number of kernels of grain that are cracked or broken), crop cleanliness, and crop yield. In some embodiments, the mobile machine is a baler and the performance information comprises one or more of bale density, bale weight, bale size, bale dryness, straw length and ash content. In some embodiments, the mobile machine includes a tillage implement and the performance information comprises one or more of soil granularity, stone size, stone density, soil uniformity, biomass treatment and soil turning quality. It will be appreciated that these are but a few examples and that other mobile machines and other types of performance information are within the ambit of the presence invention.

As shown in FIG. 5, method 500 begins with the steps from method 300 (i.e., steps 302, 304, and 306). Also, method 500 can begin with step 502, which includes recording machine settings information (e.g., see machine settings information 104 shown in FIG. 1) while the mobile machine is performing the work in the field. Also, when it is determined to or the model is configured to use recorded machine settings information (at step 503), the method 500 includes using the computing system to input the recorded machine settings information into the trained deep learning model and to receive the new machine settings information from the trained deep learning model, which is based at least partially on the recorded machine settings information and the recorded performance information. In such an example situation, at step 308, the method continues with using the computing system to control the mobile machine according to the new machine settings information generated according to trained deep learning model (in which the new machine settings information is at least partially based on the recorded machine settings information and the recorded performance information). E.g., see step 505, which includes the using of the recorded machine settings information and the recorded performance information as a basis for the generation of the new machine settings information.

FIG. 6 shows a method 600 for training a deep learning model, storing it, and using it (e.g., see methods 300 to 500 for example methods of using a trained model such as the trained in method 600). Use of the trained model resulting from the step 604 of method 600 is shown in steps 606 and 610. In some examples, the method 300 and the methods that depend on method 300 (e.g., see methods 400 and 500) are sub-methods or complementary methods of step 606 or step 610 of method 600.

As shown in FIG. 6, method 600 begins with step 602, which includes receiving, by a computing system (e.g., see computing system 102 or 200 shown in FIG. 1 or 2 respectively), initial machine settings information (see machine settings information 104 depicted in FIG. 1). The initial machine settings information includes settings used by or to be used by one or more mobile machines performing one or more tasks. In some embodiments, the one or more mobile machines include one or more agricultural machines. In some other examples, the one or more mobile machines include one or more construction machines. Also, the one or more mobile machines can include one or more forestry or landscaping machines such as various types of mobile logging equipment or mowers, etc.

Also, step 602 can include or rely on data collection by the computing system or other systems communicatively coupled to the computing system. The data collection can include gathering a dataset containing historical settings of mobile machines, preselected or designed settings of mobile machines, a corresponding results of any combination of such settings, along with other relevant information, such as machine capabilities, crop type, soil type, elevation data, weather conditions, etc. In some embodiments, the initial machine settings information is recorded by the one or more mobile machines while operating in the one or more fields. In some embodiments, the recorded information includes settings that change within a task of a mobile machine. In some of such examples, the task can include a route. In some embodiments, the initial machine settings information is predetermined information derived from designed or predetermined settings or can be a designed schedule or plan of settings for a task of a mobile machine. In some of such examples, the task, schedule, or plan can include a route. And, in some examples, the initial machine settings information is a combination of data recorded by one or more mobile machines while operating in one or more fields and predetermined settings information derived from designed settings configured to control operations of the one or more mobile machines in the one or more fields.

In some embodiments, the initial settings (e.g., see machine settings information 104) and the new settings (e.g., see new machine settings information 108) include implement positions. In some embodiments, the initial settings (e.g., see machine settings information 104) and the new settings (e.g., see new machine settings information 108) include implement heights. Depending on the embodiment, an implement can include one or more of any hydromechanical or electromechanical work tools such as augers, backhoes, bale spears, brooms, bulldozer blades, clam shell buckets, cold planes, demolition shears, equipment buckets, excavator buckets, forks, grapples, hammers, hoe rams, tilting buckets (such as 4-in-1 buckets), landscape tillers, material handling arms, mechanical pulverizers, crushers, multi processors, pavement removal buckets, pile drivers, power take-offs, quick couplers, rakes, rippers, rotating grabs, compactors, skeleton buckets, snow blowers, stump grinders, stump shears, thumbs, tiltrotators, trenchers, vibratory plate compactors, wheel saws. Or, depending on the embodiment, an implement can include one or more of farming implements such as implements that till the ground (e.g., plows, offset discs, chisels, etc.), plant seeds or transplant seedlings (e.g., seeders, planters, transplanters, etc.), harvest crops (e.g., reapers, threshers, gatherers, winnowers, or combines), bale, or perform other farming tasks such as spraying crops (e.g., sprayers). Or, depending on the embodiment, an implement can include one or more of forestry or landscaping implements such as axes, saws, mowers, or implements for tree planting or afforestation, mensuration, fire suppression, or logging or for other forestry or landscaping functions or tasks.

In some embodiments, the initial settings and the new settings include one or more of implement or actuator operation speeds or rates. In some embodiments, the initial settings and the new settings include one or more of dispensing rates, evacuation rates, flow rates, spray rates, or seeding rates, or some combination thereof. In some embodiments, the initial settings and the new settings include one or more of mobile machine default ground speeds, mobile machine maximum ground speeds, or mobile machine minimum ground speeds, or some combination thereof. In some embodiments, the initial settings and the new settings include one or more of default hydraulic pressures, maximum hydraulic pressures, or minimum hydraulic pressures, or one or more of default operating temperatures or pressures, maximum operating temperatures or pressures, or minimum operating temperatures or pressures, or some combination thereof.

At step 604, the method 600 continues with training, by the computing system, a deep learning model (e.g., see deep learning model 106 depicted in FIG. 1) using the initial machine settings information. In some embodiments, the trained model is configured to generate the new machine settings information to minimize fuel consumption of the mobile machine when performing a given field operation. Also, in some examples, the trained model is configured to generate the new machine settings information to minimize operation time of the mobile machine when performing a given field operation. Also, in some examples, the trained model is configured to generate the new machine settings information to minimize soil compaction caused by the mobile machine when performing a given field operation. Before or after, or within step 604, the method 600 can include feature extraction. Feature extraction can include extracting relevant features from the information containing the recorded settings or recorded results of operations occurring through the recorded settings. Also, before or after, or within step 604, the method 600 can include model selection. The model selection can include choosing a suitable deep learning model for sequence-based data, such as recurrent neural networks (RNNs), long short-term memory (LSTM) networks, or transformer-based models. Such models are capable of capturing temporal dependencies and learning complex patterns in the data. In some embodiments, the trained model of step 604 includes at least one of RNNs, LSTM networks, or transformer-based models. In some embodiments, the training at step 604 is according to preprocessed data, using the extracted features from the feature extraction as input sequences.

At step 606, the method 600 continues with using, by the computing system, the trained model (e.g., see trained model 107b depicted in FIG. 1) to generate new machine settings information (e.g., see new machine settings information 108 depicted in FIG. 1) for a given task. The method 600 can also include model evaluation. Such model evaluation can be a part of the use of the model at step 606. And in some examples, the evaluation can include evaluation of the trained model's performance on a dataset to ensure its generalization is valid to unseen data. The evaluation can use metrics, such as mean absolute error, root mean squared error, or custom metrics relevant to the specific application. The method 600 can also include model deployment. The deployment can include integrating the trained model into the mobile machine's control system to provide real-time updates and enhancements to settings as well as planning and optimization of settings. Such deployment can occur at step 606.

As shown in FIG. 6, the method 600 also includes step 608 that includes storing, by the computing system, the trained deep learning model (which is stored on the mobile machine). The method 600 also includes step 610 that includes using, by the computing system, the trained model to generate the new machine settings information for the given task and a given mobile machine (e.g., see mobile machine 110). In some embodiments, the given mobile machine includes an agricultural machine. In some other examples, the given mobile machine includes a construction machine. Also, the given mobile machine can include a forestry or landscaping machine.

The method 600, at step 602, 604 or 606, can include continuous improvement such as regularly updating the model with new data to ensure its performance remains accurate and up-to-date. For example, any of the new settings information described herein can be used for regularly updating the model as can any of the performance information described herein or the environmental information described herein. Also, improving the model can include monitoring the model's performance and retraining or fine-tuning the model per application of it or as needed accordingly. By implementing deep learning-based machine settings determinations, the technologies described herein can control mobile machines as well as to adjust settings of mobile machines in real time and additionally generate, update, or enhance machine settings of mobile machines or generate schedules of settings of mobile machines for future operations. With such technologies it is possible to use machine learning to (1) control mobile machines, (2) adjust settings of mobile machines in real time, and (3) generate, update, enhance, or schedule settings. And, the aforesaid features can be implemented for various factors, such as operational time efficiency, fuel efficiency, reduced soil compaction, and machine capabilities. This can lead to improved productivity, cost savings, and better overall sustainability of operations.

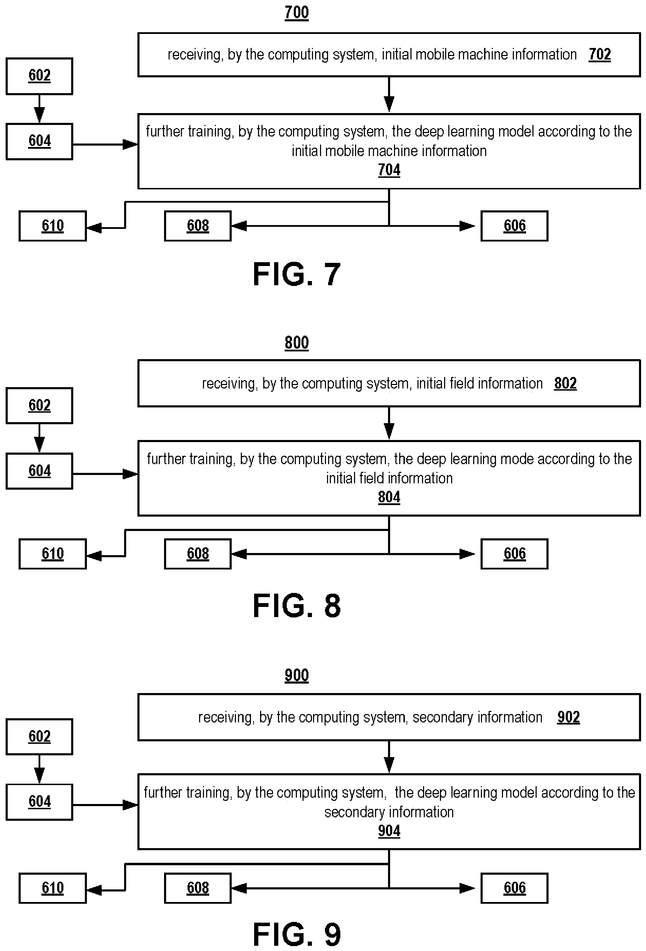

As shown in FIG. 7, method 700 begins with step 602 of method 600, which includes the receiving of the initial machine settings information. And, then continues with step 604, which includes the training of the deep learning model using the initial machine settings information. Also, as shown, the method 700 starts with step 702, which includes receiving, by the computing system, initial mobile machine information (e.g., see mobile machine information 112 depicted in FIG. 1). With method 700, at step 704, the method includes further training, by the computing system, the deep learning model according to the initial mobile machine information in addition to the initial machine settings information. Also, the method 700 can end with step 606 of method 600 (using the trained model to generate new machine settings information for a given task). Also, the method 700 can end with step 610 (using the trained model to generate the new settings information for the given task and a given mobile machine). Further, the method 700 can end with step 608 of method 600 (storing the deep learning model). In some cases, the initial mobile machine information includes one or more of machine model information, machine type information, machine size information, machine shape information, machine ground footprint information, machine turn radius information, and energy usage information. In some embodiments, the initial mobile machine information is recorded mobile machine information recorded from one or more mobile machines in one or more fields, or the initial mobile machine information is predetermined mobile machine information derived from designed machine attributes of the one or more mobile machines, or some combination thereof.

As shown in FIG. 8, method 800 begins with step 602 of method 600, which includes the receiving of the initial machine settings information. And, then continues with step 604, which includes the training of the deep learning model using the initial machine settings information. Also, as shown, the method 800 starts with step 802, which includes receiving, by the computing system, initial field information (e.g., see field information 114 depicted in FIG. 1). With method 800, at step 804, the method includes further training, by the computing system, the deep learning model according to the initial field information in addition to the initial machine settings information. Also, the method 800 can end with step 606 of method 600 (using the trained model to generate new machine settings information for a given task). Also, the method 800 can end with step 610 (using the trained model to generate the new settings information for the given task and a given mobile machine). Further, the method 800 can end with step 608 of method 600 (storing the deep learning model). In some cases, the initial field information includes one or more of field size information, field shape information, field elevation information, field topology information, soil type information, soil condition information, crop type information, crop lodging information, soil compaction information, weed density information, and weed location information. In some embodiments, the initial field information is recorded field information recorded from one or more fields, or the initial field information is predetermined or preselected field information from known field attributes, or some combination thereof.

As shown in FIG. 9, method 900 begins with step 602 of method 600, which includes the receiving of the initial machine settings information. And, then continues with step 604, which includes the training of the deep learning model using the initial machine settings information. Also, as shown, the method 900 starts with step 902, which includes receiving, by the computing system, secondary information (e.g., see secondary information 116 depicted in FIG. 1). With method 900, at step 904, the method includes further training, by the computing system, the deep learning model according to the secondary information in addition to the initial machine settings information. Also, the method 900 can end with step 606 of method 600 (using the trained model to generate new machine settings information for a given task). Also, the method 900 can end with step 610 (using the trained model to generate the new settings information for the given task and a given mobile machine). Further, the method 900 can end with step 608 of method 600 (storing the deep learning model). In some embodiments, the secondary information includes weather data, ambient condition data, time of year data, geographic region data, or any combination thereof. In some cases, the secondary information includes weather data that includes one or more of datasets collected from one or more of thermometers, barometers, radar, wind vanes, anemometers, transmissometers, hygrometers, etc. The datasets can include measured temperature, air pressure, rain or snow locations, wind direction, wind speed, atmospheric visibility, humidity, etc. In some cases, the weather data includes one or more datasets collected from one or more satellites, radiosondes, etc.

Also, as shown in FIG. 10, method 1000 begins with step 1002, which includes using a mobile machine (e.g., see mobile machine 110 shown in FIG. 1) to perform work in a field using first machine settings. Method 1000 also includes, at step 1004, recording performance information (e.g., see performance information 118). The performance information indicates a performance of the mobile machine (e.g., see mobile machine 110) while performing the work in the field. Method 1000 also includes, at step 1006, using a computing system (e.g., see computing system 102 or 200) of the mobile machine to input the recorded performance information into a trained deep learning model (e.g., see trained model 107b). The method 1000 also include includes, at step 1008, using a computing system to generate, according to the trained deep learning model and the recorded performance information, new machine settings information (e.g., see new machine setting information 108). Also, the method includes, at step 1010, receiving the new machine settings information from the trained deep learning model. And, at step 1012, using the computing system, via a controller (e.g., see controller 130 of the computing system 102), to control the mobile machine according to the new machine settings information.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
using a mobile machine (110) to perform work in a field using first machine settings (step 302);
recording performance information (118), the performance information indicating a performance of the mobile machine (110) while performing the work in the field (step 304);
using a computing system (102, 200) of the mobile machine (110) to input the recorded performance information (118) into a trained deep learning model (107b) and to receive new machine settings information (108) from the trained deep learning model (step 306); and
using the computing system (102, 200) to control the mobile machine (110) according to the new machine settings information (108) generated according to trained deep learning model (107b) (step 308).

2. The method as set forth in claim 1, further comprising,
recording environmental information (120) while the mobile machine (110) is performing the work in the field, the environmental information relating to the environment in which the mobile machine is operating (step 402); and
using the computing system (102, 200) to input the environmental information (120) into the trained deep learning model (107b) and to receive new machine settings information (108) from the trained deep learning model (step 404).

3. The method as set forth in claim 2, wherein the environmental information (120) comprises one or more of field crop information, wind direction or speed, ambient temperature, ambient humidity, soil characteristics, time of day, date, and geographic region.

4. The method as set forth in claim 3, wherein the field crop information comprises one or more of crop height, crop color, crop moisture, crop lodging, and weed information.

5. The method as set forth in any of claims 1 through 4, wherein the mobile machine (110):
is a grain harvester and the performance information (118) comprises one or more of ground speed, fuel efficiency, crop throughput, crop quality, crop cleanliness, straw quality and crop yield;
is a baler and the performance information (118) comprises one or more of bale density, bale weight, bale size, bale dryness, straw length and ash content; or
includes a tillage implement and the performance information (118) comprises one or more of soil granularity, stone size, stone density, soil uniformity, biomass treatment and soil turning quality.

6. The method as set forth in any of claims 1 through 5, further comprising:
recording machine settings information (104) while the mobile machine (110) is performing the work in the field (step 502); and
using the computing system (102, 200) to input the machine settings information (104) into the trained deep learning model (107b) and to receive the new machine settings information (108) from the trained deep learning model (step 504).

7. A system (102, 200), comprising:
a processing device (202); and
memory (204) in communication with the processing device and storing instructions (214) that, when executed by the processing device, cause the processing device to:
record performance information (118) while a mobile machine (110) is performing work in a field using first machine settings, the performance information indicating a performance of the mobile machine (110) while performing the work in the field;
input the recorded performance information (118) into a trained deep learning model (107b);
receive new machine settings information (108), which is generated according to the trained deep learning model (107b) and at least partially based on the recorded performance information (118); and
control the mobile machine (110) according to the new machine settings information (108).

8. The system as set forth in claim 7, wherein the execution of the instructions (214) cause the processing device to:
record environmental information (120) while the mobile machine (110) is performing the work in the field, the environmental information relating to the environment in which the mobile machine is operating;
input the environmental information (120) into the trained deep learning model (107b); and
receive new machine settings information (108), which is generated according to the trained deep learning model (107b) and at least partially based on the environmental information (120).

9. The system as set forth in claim 8, wherein the environmental information (120) comprises one or more of field crop information, wind direction or speed, ambient temperature, ambient humidity, soil characteristics, time of day, date, and geographic region.

10. The system as set forth in claim 9, wherein the field crop information comprises one or more of crop height, crop color, crop moisture, crop lodging, and weed information.

11. The system as set forth in any of claims 7 through 10, wherein the mobile machine (110) is a harvester and the performance information (118) comprises one or more of ground speed, fuel efficiency, crop throughput, crop quality, crop cleanliness, and crop yield.

12. The system as set forth in any of claims 7 through 11, wherein the execution of the instructions (214) cause the processing device to:
record machine settings information (104) while the mobile machine (110) is performing the work in the field; and
input the machine settings information (104) into the trained deep learning model (107b); and
receive new machine settings information (108), which is generated according to the trained deep learning model (107b) and at least partially based on the machine settings information (104).

13. The system as set forth in any of claims 7 through 12, wherein the execution of the instructions (214) cause the processing device to store the trained deep learning model (107b) on the mobile machine (110).

14. The system as set forth in any of claims 7 through 13, wherein the trained deep learning model (107b) is configured to generate the new machine settings information (108) to:
minimize fuel consumption of the mobile machine (110) when performing a given field operation; and/or
minimize operation time of the mobile machine (110) when performing a given field operation.

15. The system as set forth in any of claims 7 through 14, wherein the execution of the instructions (214) cause the processing device to generate the new machine settings information (108) according to the trained deep learning model (107b) and the recorded performance information (118).
